Europäisches Patentamt

European Patent Office

Office européen des brevets

(19)

(11) **EP 1 246 471 A1**

(12) **DEMANDE DE BREVET EUROPEEN**

(43) Date de publication:
**02.10.2002 Bulletin 2002/40**

(51) Int Cl.⁷: $H04N\ 7/30$, $H04N\ 7/50$, $G06T\ 5/00$

(21) Numéro de dépôt: **02076142.5**

(22) Date de dépôt: **19.03.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **27.03.2001 FR 0104109**

(71) Demandeur: **Koninklijke Philips Electronics N.V. 5621 BA Eindhoven (NL)**

(72) Inventeurs:
 • **Miro-Sorolla, Carolina, Société Civile S.P.I.D. 75008 Paris (FR)**
 • **Gesnot, Arnaud, c/o Société Civile S.P.I.D. 75008 Paris (FR)**
 • **Caviedes, Jorge, c/o Société Civile S.P.I.D. 75008 Paris (FR)**

(74) Mandataire: **Chaffraix, Jean Société Civile S.P.I.D. 156, Boulevard Haussmann 75008 Paris (FR)**

(54) **Dispositif implémentant conjointement un post-traitement et un décodage de données**

(57)    La présente invention concerne un dispositif de traitement de blocs de données codées comprises dans une séquence d'images numériques codées (ES) selon une technique de codage par blocs, ledit dispositif comprenant un circuit de post-traitement DFD (33). Un tel dispositif permet de corriger efficacement les artefacts de blocs tout en minimisant la bande passante utilisée, le décodeur transmettant directement des blocs de données décodées (B) au circuit de post-traitement. De plus, un tel dispositif n'introduit pas ou peu de dérive lors du décodage puisque le décodeur continue d'utiliser des images de référence (RB) lors de la compensation de mouvement. En effet, le circuit de post-traitement se trouvant dans la boucle de décodage, les images de référence ne sont plus les images décodées mais les images entièrement traitées.

FIG. 3

## Description

## Domaine technique de l'invention

La présente invention concerne un procédé et un dispositif de traitement de blocs de données codées comprises dans une séquence d'images numériques codées selon une technique de codage par blocs.

Elle trouve son application dans la correction des artéfacts de blocs qui apparaissent dans une séquence d'images numériques précédemment codées puis décodées selon une technique de codage par blocs, la norme MPEG (de l'anglais Moving Pictures Expert Group) par exemple, cette correction permettant d'atténuer la visibilité de tels artefacts causés par la technique de codage par blocs.

## Etat de la technique antérieure

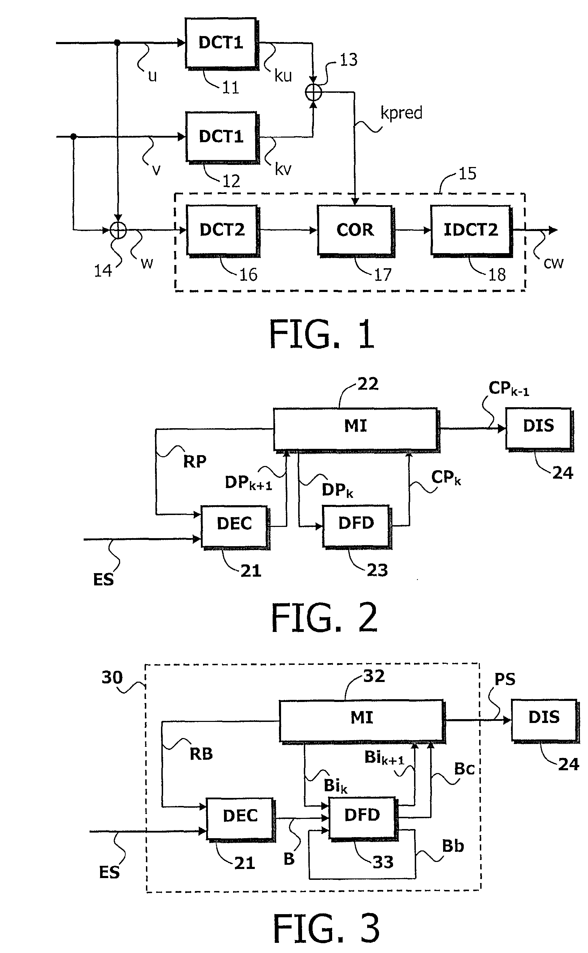

L'article intitulé "A projection-based post-processing technique to reduce blocking artifacts using a priori information on DCT coefficients of adjacent blocks", et publié par Hoon Paek et Sang-Uk Lee, dans "Proceedings of 3rd IEEE International Conference on Image Processing, vol 2, Lausanne, Switzerland, 16-19 Sept 1996, p 53-56" décrit une méthode de traitement de données comprises dans une image numérique. Une telle méthode de traitement de données comprend les étapes suivantes, représentées à la Fig. 1, à savoir:

- une étape de calcul d'une première transformation en cosinus discrète DCT1 (11) d'un premier segment (u) de N pixels avec N = 8 dans l'exemple utilisé, résultant en un premier segment transformé U,
- une étape de calcul d'une première transformation en cosinus discrète DCT1 (12) d'un second segment (v) de N pixels, le second segment étant adjacent au premier, résultant en un second segment transformé V,
- une étape de détermination (13) d'une fréquence maximale prédite (kpred) en fonction des fréquences maximales ku et kv de U et V, comme suit:

$$kpred = 2.max(ku,kv) + 2$$

avec

$ku = max(k \in \{0,...,N-1\} / U(k) \neq 0)$,
$kv = max(k \in \{0,...,N-1\} / V(k) \neq 0)$, et
max est la fonction qui donne le maximum de k parmi un ensemble de valeurs déterminées.

- une étape de traitement (15) d'un segment concaténé (w) comprenant 2N pixels, soit 16 pixels dans notre cas, et correspondant à la concaténation (14) des premier (u) et second (v) segments, ladite étape de traitement comprenant les sous-étapes suivantes de:

- calcul d'une seconde transformation en cosinus discrète DCT2 (16) du segment concaténé (w), résultant en un segment concaténé transformé W,
- correction (17) par mise à zéro des données transformées W(k) dont la fréquence k est impaire et supérieure à la fréquence maximale prédite (kpred), fournissant un segment concaténé transformé corrigé Wc,
- calcul d'une transformation discrète inverse IDCT2 (18) du segment transformé corrigé Wc, fournissant un segment concaténé corrigé (cw).

## Exposé de l'invention

La présente invention a pour but de proposer une architecture permettant un traitement de blocs de données codées comprises dans une séquence d'images numériques codées selon une technique de codage par blocs, qui utilise une moindre capacité de transmission des données lors du traitement.

En effet, la méthode de traitement décrite dans l'état de la technique antérieure est destinée à être implémentée à la sortie d'un décodeur. Le fonctionnement d'une architecture mettant en oeuvre une méthode telle que décrite en référence à la Fig. 2 nécessite, dans le cas le plus défavorable correspondant au décodage d'une image à codage prédictif bidirectionnel ou image B, deux images de référence (RP) qui transitent, via un bus de données, d'une mémoire interface (22) vers un décodeur (21). Le décodeur fournit, à partir d'une image codée (ES), une image décodée ($DP_{k+1}$) à la mémoire interface. Parallèlement au décodage, une image déjà décodée ($DP_k$) est traitée par un circuit de post-traitement (22) implémentant la méthode de l'art antérieur, ledit circuit fournissant une image traitée ($CP_k$) à la mémoire interface. Parallèlement au traitement, une image déjà stockée dans la mémoire interface ($CP_{k-1}$) est affichée sur un écran par un dispositif d'affichage (DIS). Une telle architecture est coûteuse en terme de capacité de transmission puisqu'elle la bande passante du bus de données est au maximum de 6 images (une image correspondant à une bande passante de 216 Mbit/s dans un format de codage 4:2:2), à savoir deux images de référence lue par le décodeur, une image décodée par le décodeur, une image décodée lue par le circuit de post-traitement, une image traitée et une image lue par le dispositif d'affichage.

Afin de pallier ces inconvénients, le dispositif de traitement de blocs de données codées tel que décrit dans le paragraphe d'ouverture est remarquable en ce qu'il comprend:

- un circuit de post-traitement apte à effectuer un traitement horizontal de blocs de données d'une image, associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, le circuit de post-traitement étant apte à fournir des blocs concaténés de données traitées comprenant des blocs de données entièrement traitées, partiellement traitées, et prétraitées, les données prétraitées étant destinées à être réutilisées par le circuit de post-traitement,

- une unité de décodage apte à recevoir les blocs de données codées et à fournir des blocs de données décodées au circuit de post-traitement,
- une interface mémoire apte à fournir des blocs de données déjà partiellement traitées au circuit de post-traitement, et à stocker les blocs de données partiellement traitées pour un traitement ultérieur par le circuit de post-traitement ainsi que les blocs de données entièrement traitées pour un affichage sur un écran.

Un tel dispositif permet de corriger efficacement les artefacts de blocs tout en minimisant la bande passante utilisée, puisque le décodeur transmet directement les blocs de données décodées au circuit de post-traitement. De plus, un tel dispositif n'introduit pas ou peu de dérive lors du décodage puisque le décodeur continue d'utiliser des images de référence lors de la compensation de mouvement. En effet, le circuit de post-traitement se trouvant dans la boucle de décodage, les images de référence ne sont plus les images décodées mais les images entièrement traitées.

Dans un mode particulièrement avantageux de l'invention, le dispositif de traitement de données comprend en outre:

- une mémoire interne d'entrée apte à charger des blocs futurs de données décodées et déjà partiellement traitées pour un prochain traitement par le circuit de post-traitement, et
- une mémoire interne de sortie apte à stocker des blocs passés de données traitées et partiellement traitées par le circuit de post-traitement,

le circuit de post-traitement étant apte à effectuer un traitement courant des blocs courants de données décodées, partiellement traitées et prétraitées contenues dans la mémoire interne d'entrée.

Ainsi, le dispositif de traitement de données fonctionne selon un principe de pipeline et utilise dans de meilleures conditions de très faibles ressources en terme de mémoires internes, lesdites mémoires étant assez onéreuses. Une telle solution est donc particulièrement économique.

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :

- la Fig. 1 illustre une méthode de correction d'artefacts de blocs correspondant à l'état de la technique antérieure,
- la Fig. 2 représente un exemple d'architecture implémentant directement la méthode de correction d'artefacts de blocs définie dans l'état de la technique antérieure,
- la Fig. 3 représente une architecture réalisant un traitement de données selon l'invention, où un circuit de post-traitement effectuant la correction d'artefacts de blocs est apte à traiter directement les données issues du décodeur,
- la Fig. 4 représente une architecture réalisant un traitement de données selon l'invention, où le circuit de post-traitement est apte à traiter directement les données de luminance issues du décodeur,
- la Fig. 5 représente un mode avantageux de l'architecture de traitement de données fonctionnant selon un principe de pipeline,
- la Fig. 6 illustre le fonctionnement du circuit de post-traitement selon l'invention, et
- la Fig. 7 illustre les états successifs de blocs de données appartenant à une image, au cours d'un cycle de traitement de données par le circuit de post-traitement selon l'invention.

**Exposé détaillé d'au moins un mode de réalisation de l'invention**

La présente invention concerne l'implémentation d'une méthode de post-traitement de blocs de données, appelée méthode DFD (de l'anglais "DCT frequency deblocking"). Comme nous l'avons vu précédemment, cette méthode effectue un traitement complet d'une séquence d'images codées selon une technique de codage par blocs afin de corriger les artefacts visuels dus à la technique de codage. La méthode de post-traitement peut être mise en oeuvre selon le principe décrit dans l'état de la technique antérieure.

Dans un mode de réalisation préférentiel de l'invention, elle est mise en oeuvre en introduisant des seuils de filtrage selon le principe suivant:

$$kumax = max(\ k(\{0,...,N-1\}\ /\ abs(U(k)) > T\ )$$

$$kvmax = max(\ k(\{0,...,N-1\}\ /\ abs(V(k)) > T\ )$$

où T est un seuil différent de zéro.

L'étape de détermination (13) effectue ainsi un calcul plus précis de la fréquence maximale prédite (kpred) à partir de l'introduction du seuil T, ce qui permet une correction plus efficace des artefacts de blocs. La valeur du seuil T est fonction de la taille des segments u et v. En effet, une partie seulement des pixels des segments u et v peut être traitée, par exemple les pixels de rang pair ou de rang impair.

L'étape de correction COR (17) comprend préférentiellement une sous-étape de détection de contours naturels à partir des valeurs des pixels des segments initiaux u et v et transformés U et V. Cette sous-étape permet de distinguer les contours naturels des artefacts de blocs. Pour cela, un contour naturel est détecté si deux conditions sont remplies:

- les valeurs moyennes des pixels des segments u et v de part et d'autre d'une frontière de blocs sont différentes d'une valeur importante, supérieure à M,
- les segments u et v sont de faible activité ce qui se traduit par le fait que les valeurs ku et kv sont faibles et inférieures à une valeur k0.

La méthode de post-traitement de blocs de données comprend en outre au moins un traitement horizontal H d'une image, associé à au moins un traitement vertical V de ladite image. En effet, les artefacts de blocs peuvent être présents aux frontières d'un bloc, c'est à dire sur les quatre segments délimitant verticalement ou horizontalement le bloc, un bloc de données codées selon la norme MPEG comprenant généralement 8 lignes de 8 pixels. Si l'image est traitée selon une direction horizontale, des artefacts de blocs verticaux seront détectés; à l'inverse, si l'image est traitée selon une direction verticale, des artefacts de blocs horizontaux seront détectés.

La méthode de post-traitement de blocs de données est appliquée successivement à chacune des deux trames constituant une image si l'image est composée de deux trames. Elle est appliquée préférentiellement aux données de luminance contenues dans l'image numérique. Dans tous les cas, la méthode de post-traitement de blocs de données est appliquée à un premier bloc de données et à un second bloc de données qui lui est adjacent, ligne par ligne ou colonne par colonne selon la direction de traitement.

L'architecture mettant en oeuvre la méthode de post-traitement comprend quatre étapes principales:

- une première transformation en cosinus discrète DCT1 d'un segment de N pixels correspondant à $N^2$ multiplications et $N^2$ additions,
- une seconde transformation en cosinus discrète DCT2 d'un segment de 2N pixels correspondant à $4N^2$ multiplications et $4N^2$ additions,
- une correction COR du segment transformé de longueur 2N correspondant à 4 additions, et
- une transformation en cosinus discrète inverse IDCT2 d'un segment de 2N pixels correspondant à $4N^2$ multiplications et $4N^2$ additions.

Pour obtenir un traitement complet de l'image permettant de corriger à la fois les artefacts de blocs horizontaux et les artefacts de blocs verticaux, on a pour chaque bloc:

- quatre premières transformations en cosinus discrète DCT1, deux dans la direction horizontale et deux dans la direction verticale, soit 203328 transformations pour une image entière correspondant à 5,09 millions d'opérations élémentaires par seconde,
- deux secondes transformations en cosinus discrète DCT2, une dans la direction horizontale et une dans la direction verticale, soit 101664 transformations pour une image entière correspondant à 2,55 millions d'opérations élémentaires par seconde,
- deux corrections COR du segment transformé, une dans chaque direction, soit 101664 corrections pour une image entière correspondant à 2,55 millions d'opérations élémentaires par seconde,
- deux transformations en cosinus discrète inverse IDCT2, également une dans chaque direction, soit 101664 transformations pour une image entière correspondant à 2,55 millions d'opérations élémentaires par seconde.

La Fig. 3 représente une architecture (30) réalisant un traitement de données selon l'invention. Une telle architecture comprend:

- un circuit de post-traitement DFD (33) effectuant la correction d'artefacts de blocs et apte à effectuer un traitement horizontal de blocs de données d'une image, associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, le circuit de post-traitement étant apte à fournir des blocs concaténés de données traitées comprenant des blocs de données entièrement traitées (Bc), partiellement traitées ($Bi_{k+1}$), et prétraitées (Bb), les données prétraitées étant destinées à être réutilisées par le circuit de post-traitement,
- une unité de décodage DEC (21) apte à recevoir les blocs de données codées et à fournir directement des macroblocs contenant des blocs de données décodées (B) au circuit de post-traitement,
- une interface mémoire MI (32) apte à fournir à l'unité de décodage des blocs de données de référence (RB) correspondant à des blocs entièrement traités par le circuit de post-traitement pour le décodage d'un macrobloc courant, à fournir des blocs de données déjà partiellement traitées ($Bi_k$) au circuit de post-traitement, et à stocker les blocs de données partiellement traitées ($Bi_{k+1}$) pour un traitement ultérieur par le circuit de post-traitement ainsi que les blocs de données entièrement traitées (Bc) pour un affichage sur un écran DIS (24).

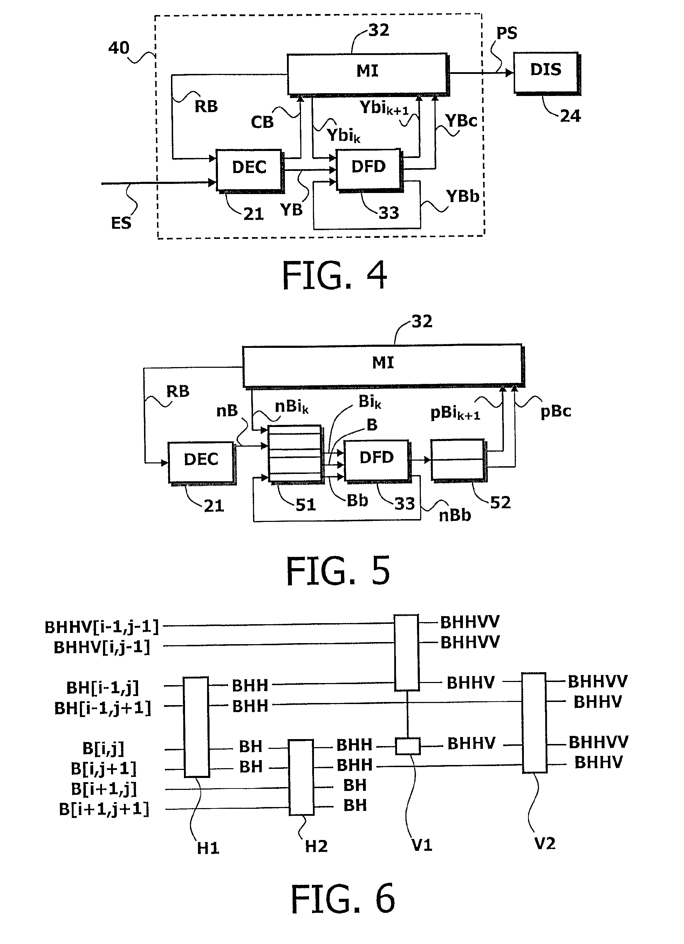

Dans un mode préférentiel de l'invention, représenté à la Fig. 4, l'unité de décodage DEC (21) effectuant une décodage macrobloc par macrobloc, est apte à transmettre 4 blocs de données de luminance (YB) au circuit de post-traitement et des blocs de chrominance, 4 dans le cas d'un format d'image 4:2:2, à l'interface mémoire MI (32).

Le circuit de post-traitement DFD (33) est apte à fournir des blocs concaténés de données traitées de luminance comprenant 4 blocs de données entièrement traitées (YBc), 2 blocs de données partiellement traitées (YBi$_{k+1}$), et 2 blocs de données prétraitées (YBb) réutilisées par le circuit de post-traitement.

L'interface mémoire est apte à fournir des blocs de données de référence (RB) à l'unité de décodage et deux blocs de données de luminance déjà partiellement traitées (YBi$_k$) au circuit de post-traitement, et à stocker les 2 blocs de données partiellement traitées (YBi$_{k+1}$) pour un traitement ultérieur par le circuit de post-traitement ainsi que les 4 blocs de données entièrement traitées (YBc) pour un affichage sur un écran DIS (24).

Ainsi, la bande passante utilisée est au maximum de 4,5 images, dans le cas où seuls les données de luminance sont traitées, et de 5 images dans le cas où les données de luminance et de chrominance sont traitées, soit une bande passante nettement inférieure à ce qu'un traitement direct, tel que décrit dans l'exposé de l'invention, aurait donné.

De plus, un telle architecture de traitement de données fournit à l'unité de décodage des blocs de données de référence, correspondant à des blocs entièrement traités par le circuit de post-traitement, afin de lui permettre d'effectuer une compensation de mouvement. Le fait d'utiliser des blocs de données entièrement traités peut parfois entraîner une légère dérive lors du décodage. Un dispositif de contrôle non représenté ici peut alors inhiber le circuit de post-traitement à partir d'une indication du type d'image fournie par l'unité de décodage. Le dispositif de contrôle peut par exemple inhiber le circuit de post-traitement pour une séquence d'images comprenant un certain nombre d'images P à codage prédictif successives, une telle configuration pouvant être source de dérive lors du décodage.

La Fig. 5 représente un mode avantageux de l'architecture de traitement de données selon l'invention. Cette architecture fonctionne selon un principe de pipeline. Tandis que le circuit de post-traitement DFD (33) traite les blocs courants de données (Bi$_k$, B, Bb) stockées dans une mémoire interne d'entrée (51), les blocs futurs de données (nB, nBi$_k$) issues de l'unité de décodage (21) et de l'interface mémoire (32) sont stockées dans la mémoire interne d'entrée.

A la sortie du circuit de post-traitement, une mémoire interne de sortie (52) contient les blocs passés de données traitées (pBc) et partiellement traitées (pBi$_{k+1}$) par le circuit de post-traitement, en vue de leur transmission à l'interface mémoire.

La Fig. 6 illustre le fonctionnement du circuit de post-traitement selon l'invention au cours d'un cycle de traitement.

D'un instant t à un instant (t+1) le circuit de post-traitement DFD va effectuer les traitements suivants dans l'ordre indiqué :

- un premier traitement horizontal H1 des 4 blocs BH[i-1,j], BH[i-1,j+1], B[i,j] et B[i,j+1], fournissant des blocs BHH[i-1,j], BHH[i-1,j+1], BH[i,j] et BH[i,j+1],
- un second traitement horizontal H2 des 4 blocs BH[i,j] BH[i,j+1], B[i+1,j] et B[i+1,j+1], fournissant des blocs BHH[i,j] BHH[i,j+1], BH[i+1,j] et BH[i+1,j+1],
- un premier traitement vertical V1 des 4 blocs BHHV[i-1,j-1], BHHV[i,j-1], BHH[i-1,j] et BHH[i,j], fournissant des blocs BHHVV[i-1,j-1], BHHVV[i,j-1], BHHV[i-1,j] et BHHV[i,j], et
- un second traitement vertical V2 des 4 blocs BHHV[i-1,j], BHHV[i,j], BHH[i-1,j+1] et BHH[i,j+1], fournissant des blocs BHHVV[i-1,j], BHHVV[i,j], BHHV[i-1,j+1] et BHHV[i,j+1].

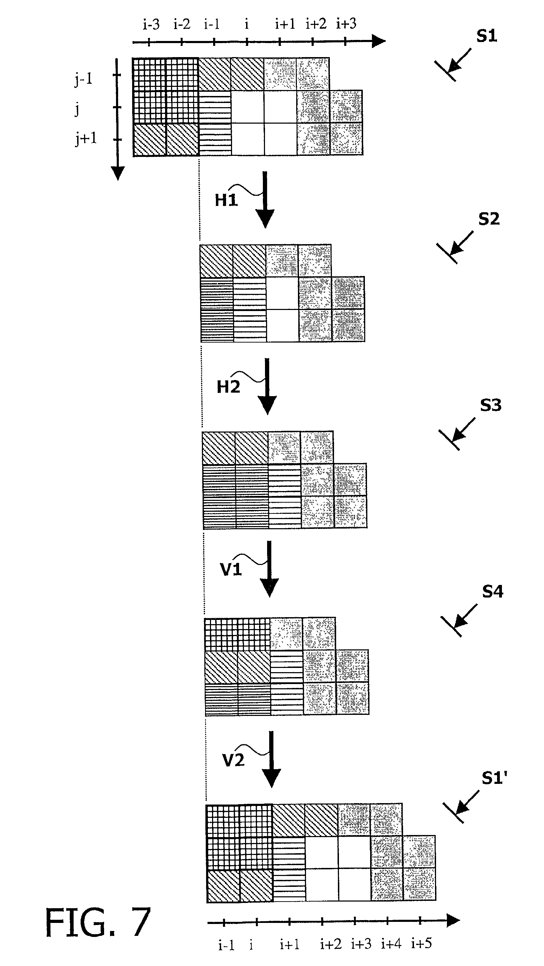

La Fig. 7 illustre les états successifs de blocs de données appartenant à une image, au cours du cycle de traitement de données par le circuit de post-traitement selon l'invention.

La mémoire interne d'entrée contient, à un instant t correspondant à un premier état (S1), les 14 blocs suivants :

- 4 blocs pour le chargement des données provenant du décodeur: B[i+2,j], B[i+3,j], B[i+2,j+1] et B[i+3,j+1],
- 2 blocs pour le chargement des données provenant de la mémoire interface : BHHV[i+1,j-1] et BHHV[i+2,j-1],
- 4 blocs pour un traitement par la DFD : B[i,j], B[i+1,j], B[i,j+1] et B[i+1,j+1],
- 2 blocs prétraités, c'est à dire traités horizontalement à un instant précédent (t-1), pour un nouveau traitement par la DFD : BH[i-1,j] et BH[i-1,j+1], et
- 2 blocs déjà traités une ligne plus tôt pour un traitement par la DFD : BHHV[i-1,j-1] et BHHV[i,j-1].

La mémoire interne de sortie contient au même instant les 6 blocs suivants :

- 2 blocs après un traitement vertical V1 par la DFD : BHHVV[i-3,j-1] et BHHVV[i-2,j-1], destinés à être envoyés à l'unité d'affichage,
- 1 bloc après des traitements horizontal H1 et verticaux V1 et V2 par la DFD BHHVV[i-3,j], destiné à être envoyé à l'unité d'affichage,
- 1 bloc après des traitements horizontal H1 et vertical V2 par la DFD BHHV[i-3,j+1], destiné à être envoyé à la mémoire interface,

- 1 bloc après des traitements horizontaux H1 et H2 et verticaux V1 et V2 par la DFD BHHVV[i-2,j], destiné à être envoyé à l'unité d'affichage, et

- 1 bloc après des traitements horizontaux H1 et H2 et vertical V2 par la DFD BHHV[i-2,j+1], destiné à être envoyé à la mémoire interface.

Le dispositif de traitement de données selon l'invention utilise, dans cette configuration, des ressources mémoires optimisées, la mémoire interne d'entrée étant de 7 kilo-octets et la mémoire interne de sortie étant de 3 kilo-octets dans le mode de réalisation préféré.

Après le premier traitement horizontal H1, correspondant à un second état (S2), on obtient les blocs BHH[i-1,j], BHH[i-1,j+1], BH[i,j] et BH[i,j+1].

Après le second traitement horizontal H2, correspondant à un troisième état (S3), on obtient les blocs BHH[i,j] BHH[i,j+1], BH[i+1,j] et BH[i+1,j+1].

Après le premier traitement vertical V1, correspondant à un quatrième état (S4), on obtient les blocs BHHVV[i-1,j-1], BHHVV[i,j-1], BHHVV[i-1,j] et BHHV[i,j].

Enfin, après le second traitement vertical V2, correspondant à un cinquième état (S1'), on obtient les blocs BHHVV[i-1,j], BHHVV[i,j], BHHV[i-1,j+1] et BHHV [i,j+1].

L'architecture de traitement de données (30,40) selon la présente invention peut être réalisée sous forme de circuits intégrés, comme décrit précédemment, ou bien sous la forme d'un logiciel (en anglais "software") embarqué sur un ou plusieurs circuits. Le logiciel met en oeuvre une méthode de traitement de blocs de données codées qui reprend ici les blocs fonctionnels de la Fig. 3. Ladite méthode comprend ainsi les étapes suivantes de:

- post-traitement (33) pour effectuer un traitement horizontal de blocs de données d'une image associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, l'étape de post-traitement étant apte à fournir des blocs concaténés de données traitées comprenant des blocs de données entièrement traitées (Bc), partiellement traitées $(Bi_{k+1})$, et prétraitées (Bb), les données prétraitées étant destinées à être réutilisées par l'étape de post-traitement,

- décodage (21) pour recevoir les blocs de données codées et pour fournir des blocs de données décodées (B) à l'étape de post-traitement,

- stockage (32) pour fournir des blocs de données déjà partiellement traitées $(Bi_k)$ à l'étape de post-traitement et pour stocker les blocs de données partiellement traitées $(Bi_{k+1})$ pour un traitement ultérieur par l'étape de post traitement ainsi que les blocs de données entièrement traitées (Bc) pour un affichage sur un écran (24).

Une telle méthode de traitement de données permet ainsi de minimiser les temps d'accès à une mémoire et donc d'optimiser le temps d'exécution de la méthode.

Il existe de nombreuses manières pour implémenter les fonctions décrites au moyen de logiciel. A cet égard, les Figs. 3 et 4 sont très schématiques, chaque figure représentant un mode de réalisation seulement. Donc, bien qu'une figure montre différentes fonctions sous forme de blocs séparés, ceci n'exclut pas qu'un seul logiciel effectue plusieurs fonctions. Ceci n'exclut pas non plus qu'une fonction puisse être effectuée par un ensemble de logiciels.

Il est possible d'implémenter ces fonctions au moyen d'un circuit de décodeur vidéo ou d'un circuit de récepteur - décodeur numérique de télévision (en anglais "set top box"), ledit circuit étant convenablement programmé. Un jeu d'instructions contenu dans une mémoire de programmation peut provoquer le circuit à effectuer les différentes opérations décrites précédemment en référence aux Figs. 3 et 4. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau internet. Dans ce cas, un fournisseur de service mettra le jeu d'instructions à la disposition des intéressés.

Aucun signe de référence entre parenthèses dans le présent texte ne doit être interprété de façon limitative. Le verbe "comprendre" et ses conjugaisons n'exclut pas la présence d'autres éléments ou étapes que ceux listés dans une phrase. Le mot "un" ou "une" précédant un élément ou une étape n'exclut pas la présence d'une pluralité de ces éléments ou de ces étapes.

## Revendications

**1.** Dispositif de traitement de blocs de données codées comprises dans une séquence d'images numériques codées (ES) selon une technique de codage par blocs, ledit dispositif comprenant:

- un circuit de post-traitement (33) apte à effectuer un traitement horizontal de blocs de données d'une image, associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, le circuit de post-traitement étant apte à fournir des blocs concaténés de données traitées comprenant des blocs de données entièrement traitées (Bc), partiellement traitées ($Bi_{k+1}$), et prétraitées (Bb), les données prétraitées étant destinées à être réutilisées par le circuit de post-traitement,

- une unité de décodage (21) apte à recevoir les blocs de données codées et à fournir des blocs de données décodées (B) au circuit de post-traitement,

- une interface mémoire (32) apte à fournir des blocs de données déjà partiellement traitées ($Bi_k$) au circuit de post-traitement, et à stocker les blocs de données partiellement traitées ($Bi_{k+1}$) pour un traitement ultérieur par le circuit de post-traitement ainsi que les blocs de données entièrement traitées (Bc) pour un affichage sur un écran (24).

2. Dispositif de traitement de données selon la revendication 1, comprenant en outre:

- une mémoire interne d'entrée (51) apte à charger des blocs futurs de données décodées (nB) et déjà partiellement traitées ($nBi_k$) pour un prochain traitement par le circuit de post-traitement (33), et

- une mémoire interne de sortie (52) apte à stocker des blocs passés de données traitées (pBc) et partiellement traitées ($pBi_{k+1}$) par le circuit de post-traitement,

le circuit de post-traitement étant apte à effectuer un traitement courant des blocs courants de données décodées (B), partiellement traitées ($Bi_k$) et prétraitées (Bb) contenues dans la mémoire interne d'entrée.

3. Circuit de traitement (33) de blocs de données issues d'une unité de décodage (21) apte à effectuer un traitement horizontal des blocs de données, associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, le circuit de post-traitement étant apte à fournir des blocs concaténés de données traitées comprenant des blocs de données entièrement traitées (Bc), partiellement traitées ($Bi_{k+1}$), et prétraitées (Bb), les données prétraitées étant destinées à être réutilisées par le circuit de post-traitement et les blocs de données traitées ($Bc, Bi_{k+1}$) étant destinées à être transmis à une mémoire interface (32).

4. Procédé de traitement de blocs de données codées comprises dans une séquence d'images numériques codées (ES) selon une technique de codage par blocs, ledit procédé comprenant les étapes suivantes de:

- post-traitement (33) pour effectuer un traitement horizontal de blocs de données d'une image, associé à un traitement vertical desdits blocs, le traitement horizontal ou vertical comprenant un traitement unitaire d'un premier bloc, le traitement unitaire d'un second bloc adjacent audit premier bloc et un traitement double de la concaténation des premier et second blocs, l'étape de post-traitement étant apte à fournir des blocs concaténés de données traitées comprenant des blocs de données entièrement traitées (Bc), partiellement traitées ($Bi_{k+1}$), et prétraitées (Bb), les données prétraitées étant destinées à être réutilisées par l'étape de post-traitement,

- décodage (21) pour recevoir les blocs de données codées et pour fournir des blocs de données décodées (B) à l'étape de post-traitement,

- stockage (32) pour fournir des blocs de données déjà partiellement traitées ($Bi_k$) à l'étape de post-traitement et pour stocker les blocs de données partiellement traitées ($Bi_{k+1}$) pour un traitement ultérieur par l'étape de post traitement ainsi que les blocs de données entièrement traitées (Bc) pour un affichage sur un écran (24).

5. Produit "programme d'ordinateur" pour décodeur vidéo comprenant un jeu d'instructions qui, lorsqu'elles sont chargées dans le décodeur vidéo, amène celui-ci à effectuer le procédé de traitement de blocs de données codées selon la revendication 4.

6. Produit "programme d'ordinateur" pour récepteur - décodeur numérique de télévision comprenant un jeu d'instructions qui, lorsqu'elles sont chargées dans le récepteur - décodeur numérique de télévision, amène celui-ci à effectuer le procédé de traitement de blocs de données codées selon la revendication 4.

## FIG. 1

## FIG. 2

## FIG. 3

FIG. 4

FIG. 5

FIG. 6

FIG. 7

EP 1 246 471 A1

| Office européen des brevets | RAPPORT DE RECHERCHE EUROPEENNE | Numéro de la demande EP 02 07 6142 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | PAEK H ET AL: "A DCT-BASED SPATIALLY ADAPTIVE POST-PROCESSING TECHNIQUE TO REDUCE THE BLOCKING ARTIFACTS IN TRANSFORM CODED IMAGES" IEEE TRANSACTIONS ON CIRCUITS AND SYSTEMS FOR VIDEO TECHNOLOGY, IEEE INC. NEW YORK, US, vol. 10, no. 1, février 2000 (2000-02), pages 36-41, XP000906587 ISSN: 1051-8215 * le document en entier * | 1,3-6 | H04N7/30 H04N7/50 G06T5/00 |
| A,D | PAEK H ET AL: "A PROJECTION-BASED POST-PROCESSING TECHNIQUE TO REDUCE BLOCKING ARTIFACT USING A PRIORI INFORMATION ON DCT COEFFICIENTS OF ADJACENT BLOCKS" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. 2, 16 septembre 1996 (1996-09-16), pages 53-56, XP000733228 ISBN: 0-7803-3259-8 * le document en entier * | 1,3-6 | |
| A | PAEK H ET AL: "ON THE POCS-BASED POSTPROCESSING TECHNIQUE TO REDUCE THE BLOCKING ARTIFACTS IN TRANSFORM CODED IMAGES" IEEE TRANSACTIONS ON CIRCUITS AND SYSTEMS FOR VIDEO TECHNOLOGY, IEEE INC. NEW YORK, US, vol. 8, no. 3, 1 juin 1998 (1998-06-01), pages 358-367, XP000767705 ISSN: 1051-8215 * le document en entier * | 1,3-6 | |

**DOMAINES TECHNIQUES RECHERCHES (Int.Cl.7)**

G06T
H04N

-/--

Le présent rapport a été établi pour toutes les revendications

| Lieu de la recherche | Date d'achèvement de la recherche | Examinateur |
|---|---|---|
| LA HAYE | 25 juin 2002 | With, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## RAPPORT DE RECHERCHE EUROPEENNE

**Office européen des brevets**

Numéro de la demande

EP 02 07 6142

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | STASINSKI R ET AL: "POCS-based image reconstruction from irregularly-spaced samples" PROCEEDINGS 2000 INTERNATIONAL CONFERENCE ON IMAGE PROCESSING (CAT. NO.00CH37101), PROCEEDINGS OF 7TH IEEE INTERNATIONAL CONFERENCE ON IMAGE PROCESSING, VANCOUVER, BC, CANADA, 10-13 SEPT. 2000, pages 315-318 vol.2, XP001064919 2000, Piscataway, NJ, USA, IEEE, USA ISBN: 0-7803-6297-7 * résumé; paragraphe 2.2 * | 1,3-6 | |
| A | HOON PAEK ET AL: "NON-ITERATIVE POST-PROCESSING TECHNIQUE FOR TRANSFORM CODED IMAGE SEQUENCE" PROCEEDINGS OF THE INTERNATIONAL CONFERENCE ON IMAGE PROCESSING. (ICIP). WASHINGTON, OCT. 23 - 26, 1995, LOS ALAMITOS, IEEE COMP. SOC. PRESS, US, vol. 3, 23 octobre 1995 (1995-10-23), pages 208-211, XP000623136 ISBN: 0-7803-3122-2 * le document en entier * | 1,3-6 | |
| A | US 5 428 395 A (JEONG JECHANG) 27 juin 1995 (1995-06-27) * abrégé * | 1,3-6 | |
| A | US 5 801 776 A (ISHIKAWA TERUHISA ET AL) 1 septembre 1998 (1998-09-01) * abrégé * | 1,3-6 | |

DOMAINES TECHNIQUES RECHERCHES (Int.Cl.7)

-/--

Le présent rapport a été établi pour toutes les revendications

| Lieu de la recherche | Date d'achèvement de la recherche | Examinateur |
|---|---|---|
| LA HAYE | 25 juin 2002 | With, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**Office européen des brevets**

# RAPPORT DE RECHERCHE EUROPEENNE

Numéro de la demande

EP 02 07 6142

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | BEREKOVIC M ET AL: "Co-processor architecture for MPEG-4 main profile visual compositing" 2000 IEEE INTERNATIONAL SYMPOSIUM ON CIRCUITS AND SYSTEMS. EMERGING TECHNOLOGIES FOR THE 21ST CENTURY. PROCEEDINGS (IEEE CAT NO.00CH36353), ISCAS 2000 GENEVA. 2000 IEEE INTERNATIONAL SYMPOSIUM ON CIRCUITS AND SYSTEMS. EMERGING TECHNOLOGIES FOR THE 21, pages 180-183 vol.2, XP002191162 2000, Lausanne, Switzerland, Presses Polytech. Univ. Romandes, Switzerland ISBN: 0-7803-5482-6 * le document en entier * | 1,3-6 | |

DOMAINES TECHNIQUES
RECHERCHES (Int.Cl.7)

Le présent rapport a été établi pour toutes les revendications

| Lieu de la recherche | Date d'achèvement de la recherche | Examinateur |
|---|---|---|
| LA HAYE | 25 juin 2002 | With, F |

**ANNEXE AU RAPPORT DE RECHERCHE EUROPEENNE
RELATIF A LA DEMANDE DE BREVET EUROPEEN NO.**        EP 02 07 6142

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2002

| Document brevet cité au rapport de recherche | | Date de publication | Membre(s) de la famille de brevet(s) | Date de publication |
|---|---|---|---|---|
| US 5428395 | A | 27-06-1995 | KR 166717 B1 | 20-03-1999 |
| | | | DE 69321038 D1 | 22-10-1998 |
| | | | DE 69321038 T2 | 18-02-1999 |
| | | | EP 0575202 A2 | 22-12-1993 |
| | | | JP 2931736 B2 | 09-08-1999 |
| | | | JP 6233142 A | 19-08-1994 |
| US 5801776 | A | 01-09-1998 | JP 7007732 A | 10-01-1995 |
| | | | US 6333951 B1 | 25-12-2001 |

EPO FORM P0460

Pour tout renseignement concernant cette annexe : voir Journal Officiel de l'Office européen des brevets, No.12/82